# EUROPEAN PATENT APPLICATION

(11) **EP 2 565 761 A1**
(43) Date of publication of application: **06.03.2013**
(21) Application number: 11179866.6
(22) Date of filing: 02.09.2011
(51) Int. Cl.: G06F 3/048, G06F 1/16

(54) **Electronic device including touch-sensitive displays and method of controlling same**

(71) Applicant: Research In Motion Limited, Waterloo, ON N2L 3W8 (CA)
(72) Inventor: Pasquero, Jerome, Waterloo, ON N2L 3W8 (CA); Loney, Eric, Philip, Waterloo, ON N2L 3W8 (CA); Griffin, Jason, Tyler, Waterloo, ON N2L 3W8 (CA); Stonehouse, Noel, John, Orland, Waterloo, ON N2L 3W8 (CA)
(74) Representative: Fennell, Gareth Charles

(57) **Abstract**

A method includes displaying first information on a first touch-sensitive display of an electronic device and displaying second information on a second touch-sensitive display of the electronic device, detecting a first touch on the first touch-sensitive display and detecting a second touch on the second touch-sensitive display, performing a function associated with the single gesture when the first touch and the second touch are single-gesture associated; and associating the first touch with the first information and the second touch with the second information when the first touch and the second touch are not single-gesture associated.

## Description

### FIELD OF TECHNOLOGY

The present disclosure relates to electronic devices including, but not limited to, portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed. Improvements in electronic devices with displays are desirable.

### SUMMARY

A method includes displaying first information on a first touch-sensitive display of an electronic device and displaying second information on a second touch-sensitive display of the electronic device, detecting a first touch on the first touch-sensitive display and detecting a second touch on the second touch-sensitive display, performing a function associated with a single gesture when the first touch and the second touch are single-gesture associated; and associating the first touch with the first information and the second touch with the second information when the first touch and the second touch are not single-gesture associated. An electronic device includes a first touch-sensitive display, a second touch-sensitive display, and a processor. The processor is coupled to the first touch-sensitive display and to the second touch-sensitive display to display first information on the first touch-sensitive display of and display second information on the second touch-sensitive display, detect a first touch on the first touch-sensitive display, detect a second touch on the second touch-sensitive display, perform a function associated with a single gesture when the first touch and the second touch are single-gesture associated; and associate the first touch with the first application and the second touch with the second application when the first touch and the second touch are not single-gesture associated.

### BRIEF DESCRIPTION OF THE DRAWINGS

FIG. 1 is a block diagram of a portable electronic device in accordance with the disclosure.

FIG. 2 is a front view of an example of a portable electronic device in accordance with the disclosure.

FIG. 3 is a flowchart illustrating a method of controlling the portable electronic device in accordance with the disclosure.

FIG. 4 through FIG. 12 are front views illustrating examples of the portable electronic device in accordance with the disclosure.

### DETAILED DESCRIPTION

The following describes an electronic device and a method that includes displaying first information on a first touch-sensitive display of an electronic device and displaying second information on a second touch-sensitive display of the electronic device, detecting a first touch on the first touch-sensitive display and detecting a second touch on the second touch-sensitive display, performing a function associated with a single gesture when the first touch and the second touch are single-gesture associated; and associating the first touch with the first information and the second touch with the second information when the first touch and the second touch are not single-gesture associated.

Although the details and features described in relation to one or more examples may not be specifically described in relation to other examples, the details and features described herein may be utilized in any of the examples described and in any combination of details and features.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, and so forth. The portable electronic device may be a portable electronic device without wireless communication capabilities, such as handheld electronic games, digital photograph albums, digital cameras, media players, e-book readers, and so forth. Examples of non portable electronic devices include desktop computers, electronic white boards, smart boards utilized for collaboration, built-in monitors or displays in furniture or appliances, and so forth.

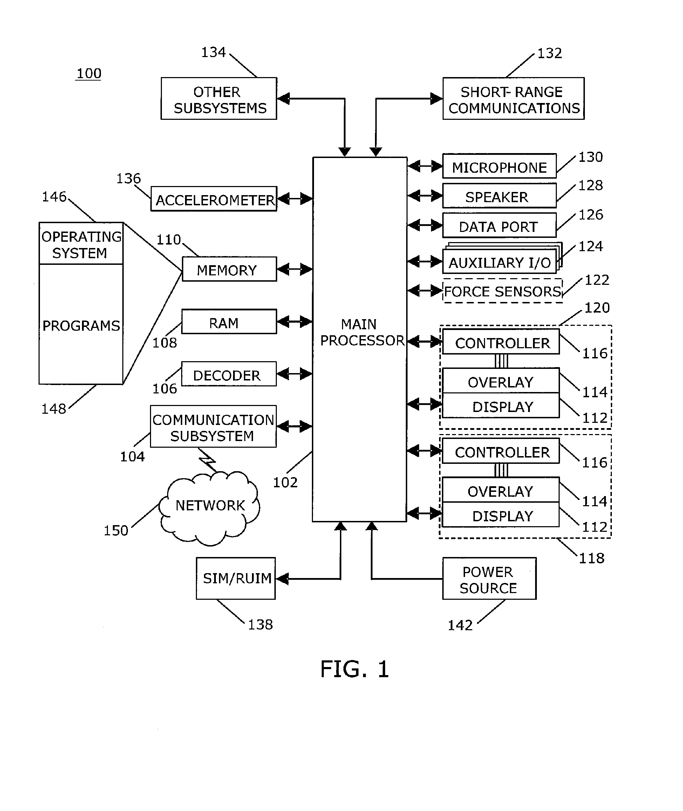

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably coupled to an electronic controller 116 that together comprise a touch-sensitive display 118, another display 112 with a touch-sensitive overlay 114 operably coupled to an electronic controller 116 that together comprise another touch-sensitive display 120, an auxiliary input/output (I/O) subsystem 124, a data port 126, a speaker 128, a microphone 130, short-range communications 132, and other device subsystems 134. Input via a graphical user interface may be provided via the touch-sensitive display 118 and/or the touch-sensitive display 120. For both the touch-sensitive display 118 and the touch-sensitive display 120, the processor 102 interacts with the touch-sensitive overlay 114 via the electronic controller 116. Information, such as text, characters, symbols, images, icons, and other items that may be displayed or rendered on a portable electronic device, is displayed on one or both of the touch-sensitive display 118 and the touch-sensitive display 120 via the processor 102. The processor 102 may interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 and the touch-sensitive display 120 may be any suitable touch-sensitive displays, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

One or more touches, also known as touch contacts or touch events, may be detected by the touch-sensitive display 118. Similarly, one or more touches may be detected by the touch-sensitive display 120. The processor 102 may determine attributes of the touch, including a location of a touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118 or the touch-sensitive display 120. For example, the x location component may be determined by a signal generated from one touch sensor, and the y location component may be determined by a signal generated from another touch sensor. A signal is provided to the controller 116 in response to detection of a touch. A touch may be detected from any suitable input member, such as a finger, thumb, appendage, or other objects, for example, a stylus, pen, or other pointer, depending on the nature of the touch-sensitive display 118 and/or the touch-sensitive display 120. Multiple simultaneous touches may be detected on one or both of the touch-sensitive display 118 and the touch-sensitive display 120.

One or more gestures may be detected by the touch-sensitive display 118. One or more gestures may also be detected by the touch-sensitive display 120. A gesture, such as a swipe, also known as a flick, is a particular type of touch on a touch-sensitive display 118 and may begin at an origin point and continue to an end point. A gesture may include one or more touch contacts. A gesture on the touch-sensitive display 118 may overlap in time with a gesture on the touch-sensitive display 120 and the processor 102 may distinguish between and identify each of the gestures. A gesture may be identified by attributes of the gesture, including origin point, end point, number of contacts, distance traveled, duration, velocity, and direction, for example. A gesture may be long or short in distance and/or duration. Two points of the gesture may be utilized to determine a direction of the gesture.

A multi-touch gesture may also be detected by the touch-sensitive display 118 and/or the touch-sensitive display 120. A multi-touch gesture is a gesture that begins at more than one origin point and ends at more than one end point. A gesture may also include a hover. A hover may be a touch at a location that is generally unchanged over a period of time or is associated with the same selection item for a period of time. A single gesture associated with touches on two touch-sensitive displays 118, 120 includes any combination of single-touch gestures and multi-touch gestures on the touch-sensitive displays 118, 120. The touch on either touch-sensitive display may be a single-touch gesture or multi-touch gesture. Touches that are detected on multiple touch-sensitive devices and that are associated with a single gesture are referred to as single-gesture associated touches.

The processor 102 may optionally interact with one or more force sensors 122. The force sensors 122 may be disposed in conjunction with the touch-sensitive display 118 and the touch-sensitive display 120 to determine or react to forces applied to the touch-sensitive display 118 and/or the touch-sensitive display 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities.

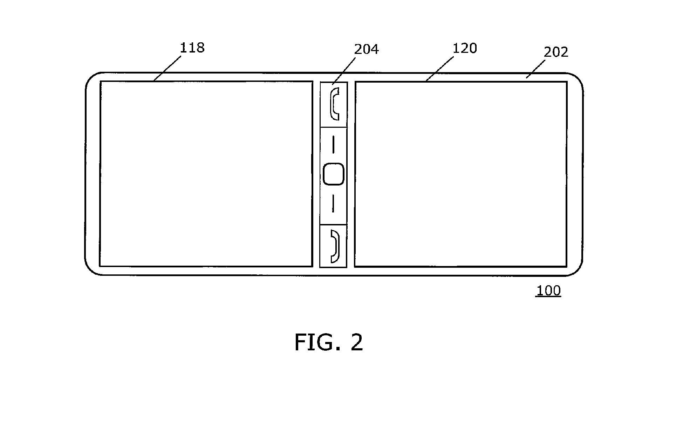

A front view of an example of the electronic device 100 is shown in FIG. 2. The electronic device 100 includes a housing 202 in which the touch-sensitive display 118 and the touch-sensitive display 120 are disposed. The housing 202 and the touch-sensitive displays 118, 120 enclose components such as the components shown in FIG. 1. The touch-sensitive display 118 and the touch-sensitive display 120 are separate displays and may be separately controlled. In the example shown in FIG. 2, the touch-sensitive display 118 is physically separated from the touch-sensitive display 120 by the housing 202 and physical keys or buttons, such as the keys 204, may be disposed between the touch-sensitive display 118 and the touch-sensitive display 120. Alternatively, the keys 204 may be implemented as an additional touch-sensitive display disposed between the touch-sensitive displays 118, 120. The portable electronic device 100 may be utilized in a landscape orientation, as illustrated in FIG. 2, or in a portrait orientation. In the example shown in FIG. 2, the portable electronic device 100 appears identical when turned upside down or rotated 180 degrees.

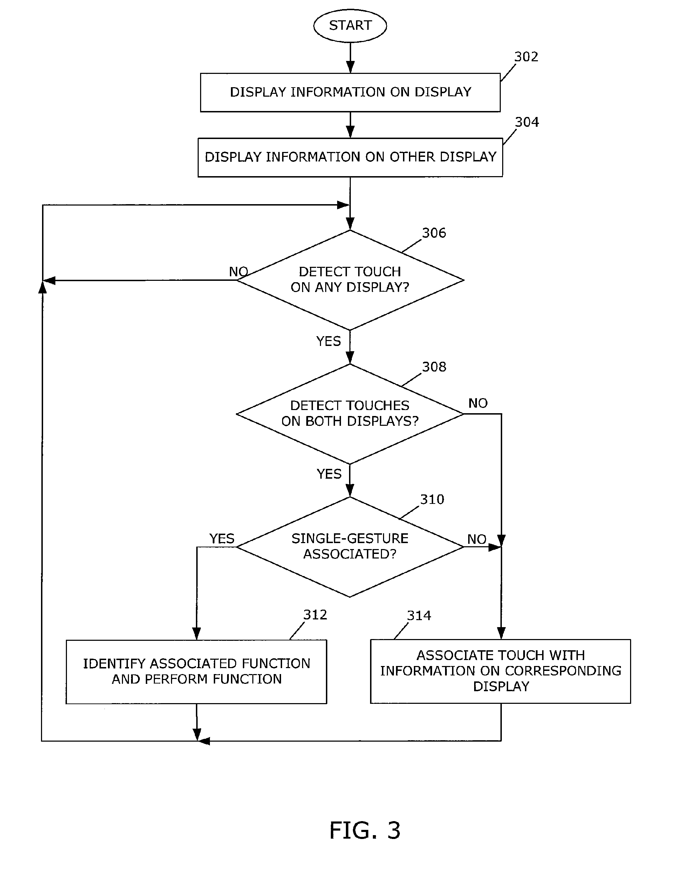

A flowchart illustrating a method of controlling the electronic device is shown in FIG. 3. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

Information, which may be associated with one application or program, is displayed 302 on the touch-sensitive display 118. Information, which may be associated with another application or program, is displayed 304 on the other touch-sensitive display 120. The applications or programs include, for example, an email application, a calendar application, a contacts application, a Web browser application, a map application, and so forth, as known in the art. Although the above example utilizes different applications displayed among the displays 118, 120, information associated with the same application may alternatively be displayed on the two displays 118, 120.

When a touch is detected 306 on either of the touch-sensitive displays 118, 120, attributes of the touch are determined as described above. When a touch is not detected 308 on both of the touch-sensitive displays 118, 120, the process continues at 314. A touch may be associated with information by utilizing the touch data to provide input that is utilized by an application associated with the information.

When a touch is detected 308 on both of the touch-sensitive displays 118, 120, the touch data from the touches on both displays 118, 120 is utilized to determine 310 whether the two touches are associated with a single gesture, referred to as single-gesture associated. The touch may include one or more touch contacts. Based on attributes of the touches, a single gesture associated with the touches on the two touch-sensitive displays 118, 120 may be identified. For example, a single gesture may be identified by attributes that may include one or more origin points, end points, number of contacts, distance(s) traveled, durations, velocities, and direction(s) of the two touches. Attributes of the two touches are utilized to determine whether or not the two touches are associated with a single gesture by comparing the attributes of the two touches to attributes of the single gesture. When the attributes of the touch touches are close enough to the attributes of the single gesture, the two touches are considered to be a single gesture or single-gesture associated. When the two touches are not associated with a single gesture, the two touches may be treated as separate touches that may be separate gestures.

When a single gesture is identified, the touches are single-gesture associated at 310, the associated function is identified and performed 312.

When a single gesture is not associated with both touches at 310, the touches are not single-gesture associated, and the process continues at 314. Each touch is associated 314 with its corresponding display and is processed accordingly. For example, if a touch is detected on only one of the touch-sensitive displays 118, 120, the touch is associated with the display on which the touch is detected and processed in association with the information displayed on that display, e.g., the information displayed with respect to the application displayed, and the touch data for the touch is utilized to provide input to the application displayed on that display. For example, if a touch is detected on both touch-sensitive displays 118, 120, each touch is associated 314 with the display on which the touch is detected, and processed in association with the information displayed on that display, e.g., the information displayed with respect to the application displayed. In an example where application A is displayed on one touch-sensitive display 118 and application B is displayed on the other touch-sensitive display 120, the touch detected by the touch-sensitive display 118 is associated with the information displayed in accordance with application A, and input corresponding to that touch is provided to application A, e.g., utilizing the touch data for that associated touch. Similarly, in accordance with this example, the touch detected by the other touch-sensitive display 120 is associated with the information displayed in accordance with application B and input corresponding to that touch is provided to application B, e.g., utilizing the touch data for that associated touch.

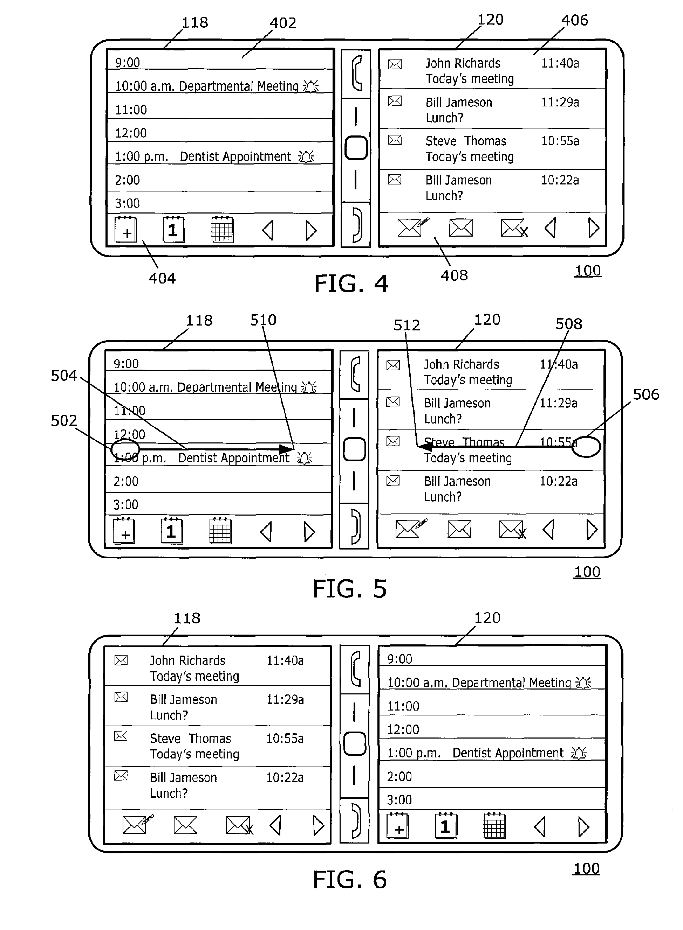

Examples of touches on the touch-sensitive displays 118, 120 are illustrated in FIG. 4 through FIG. 12. The terms upward, downward, left, and right, are utilized to provide reference to the orientation of the electronic device in the figures and are not otherwise limiting.

In the example illustrated in FIG. 4 through FIG. 6, information associated with a calendar application is displayed on the touch-sensitive display 118. As shown in FIG. 4, the information illustrated includes a day view 402 including stored calendar event information along with selectable calendar options 404. Information associated with an email application is displayed on the touch-sensitive display 120. The information illustrated includes a list of email messages 406 along with selectable email options 408.

As shown in FIG. 5, a touch, beginning at a touch location 502, is detected beginning on the left side of the touch-sensitive display 118, in the calendar day view 402. The touch moves from left to right, as illustrated by the arrow 504. Another touch, beginning at a location 506, is also detected beginning on the right side of the touch-sensitive display 120, in the list of email messages 406. The other touch moves from right to left, as illustrated by the arrow 508. The touches begin at or near the same time and overlap partially in time. The touches move in opposite directions toward each other, as illustrated by the arrows 504, 508, and the end point 510 of the touch is near the end point of the other touch. A single gesture is associated with the two touches, and the single gesture is identified. As illustrated in FIG. 6, the gesture is utilized to switch the information displayed such that the information associated with the calendar application is displayed on the touch-sensitive display 120, and the information associated with the email application is displayed on the touch-sensitive display 118. Although the touch begins on the left side of the touch-sensitive display 118 and the other touch begins on the right side of the touch-sensitive display 120, the starting locations of the touches may differ from those described and any pinching gesture may be utilized to switch the displayed information.

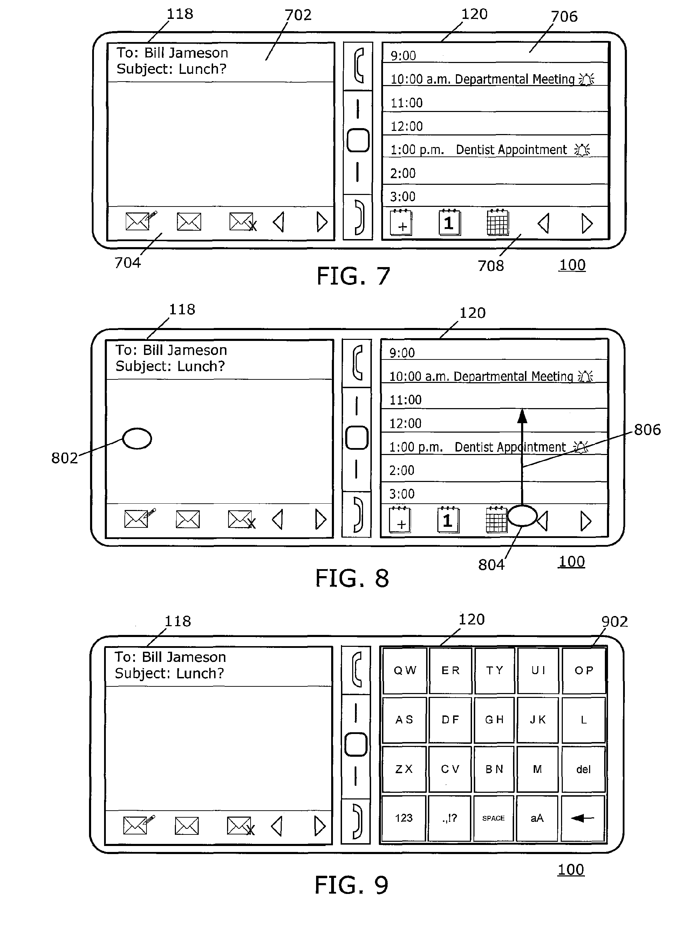

In the example illustrated in FIG. 7 through FIG. 9, information associated with an email application is displayed on the touch-sensitive display 118. As shown in FIG. 7, the information illustrated includes a new email message 702, during composition of the new email message, along with selectable email options 704. Information associated with a calendar application is displayed on the touch-sensitive display 120. The information illustrated includes a day view 706 including stored calendar event information along with selectable calendar options 708.

As shown in FIG. 8, a touch at a touch location 802 on touch-sensitive display 118 is detected. The location 802 of the touch is generally unchanged and the touch is maintained during a touch at a location 804 on the touch-sensitive display 120. The touch at the location 804 is detected beginning near the bottom of the touch-sensitive display 120, in the selectable email options 704. The touch moves upwardly, as illustrated by the arrow 806. The touches begin at or near the same time and overlap partially in time in this example. A single gesture is associated with the two touches and the single gesture is identified. As shown in FIG. 9, the gesture is utilized to display a keyboard 902 associated with the email application to facilitate composition of the email 702 displayed on the touch-sensitive display 118.

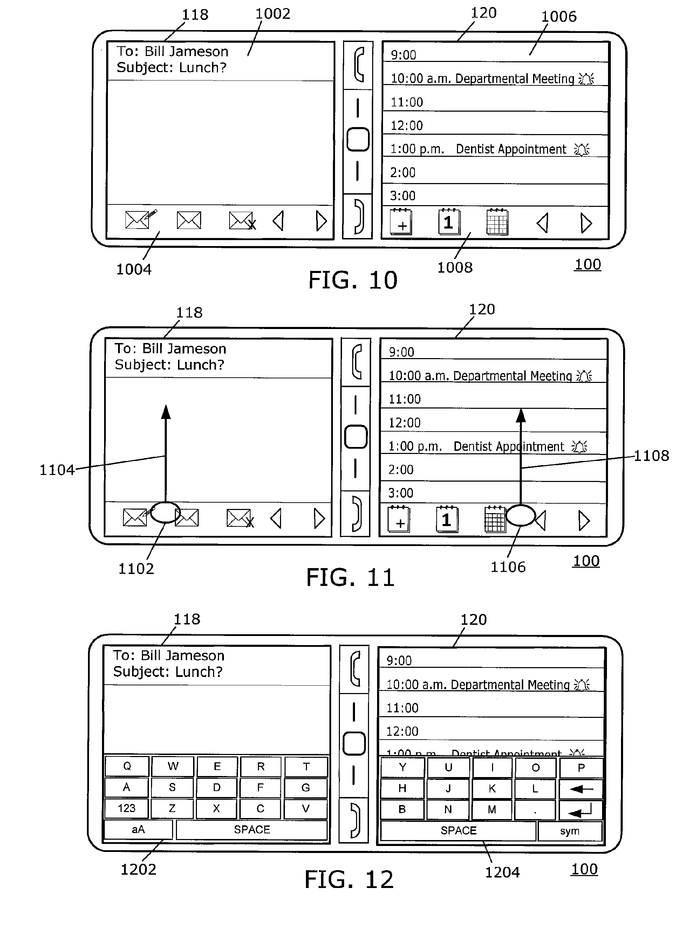

In the example illustrated in FIG. 10 through FIG. 12, information associated with an email application is displayed on the touch-sensitive display 118. The information illustrated in FIG. 10 includes a new email message 1002 along with selectable email options 1004. Information associated with a calendar application is displayed on the touch-sensitive display 120. The information includes a day view 1006 including stored calendar event information along with selectable calendar options 1008.

As shown in FIG. 11, a touch at a location 1102 is detected beginning near the bottom of the touch-sensitive display 118 and moving upwardly, as illustrated by the arrow 1104. An other touch at a location 1106 is detected beginning near the bottom of the touch-sensitive display 120 and moving upwardly, as illustrated by the arrow 1108. The touches begin at or near the same time and overlap partially in time in this example. A single gesture is associated with the two touches and the single gesture is identified. As shown in FIG. 12, the gesture is utilized to display a keyboard, including a left side 1202 of a qwerty keyboard on the display 118 and a right side 1204 of the qwerty keyboard on the display 120. The left and right sides 1202, 1204 of the keyboard may be utilized to compose the email 1002 displayed on the touch-sensitive display 118.

According to another example, a map may be displayed on the touch-sensitive display 118, for example. A touch on the touch-sensitive display 118 while a touch moves up or down on the touch-sensitive display 120 may be identified as a single gesture to adjust the zoom level, for example. Optionally, a slider bar or zoom level bar may be illustrated on the touch-sensitive display 120 during the gesture.

According to yet another example, information associated with an application is displayed on the touch-sensitive display 118. A touch on the touch-sensitive display 118 while a touch moves from left to right on the touch-sensitive display 120 may be identified as a single gesture to extend the information or to display further information associated with the application on the touch-sensitive display 120. For example, contact details may be displayed on the touch-sensitive display 118 and a touch on the touch-sensitive display 118 while a touch moves from left to right on the touch-sensitive display 120, may be identified as a single gesture to display further contact details.

Although the touches overlap at least partially in time in each of the examples described herein, touches that do not overlap in time may also be identified as a single gesture, based on the attributes of the touches. A function may be identified and performed based on the single gesture.

In the following example, a touch detected on the touch-sensitive display 118 and a touch detected on the touch-sensitive display 120 are not identified as a single gesture, and the touch data may be utilized to provide input to each application such that touch data associated with the touch on the touch-sensitive display 118 is utilized to provide input to the application associated with the information displayed on the touch-sensitive display 118. Similarly, the touch data associated with the touch on the touch-sensitive display 120 is utilized to provide input to the application associated with the information displayed on the touch-sensitive display 120. For example, an email may be selected based on the location of the touch on the touch-sensitive display 118, and a calendar record may be opened based on the location of the touch on the touch-sensitive display 120. According to another example, an email list may be displayed on the touch-sensitive display 118 and a map may be panned on the touch-sensitive display 120.

Information associated with two different applications may optionally be displayed. The information may be displayed by displaying information associated with one application on one touch-sensitive display and by displaying information associated with the other application on the other touch-sensitive display. The processor of the portable electronic device may identify a single gesture that is associated with the two touches and perform a function associated with the single gesture. The portable electronic device distinguishes between touches provided as input to one or both of the applications and touches that utilized, for example, at the operating system level of the portable electronic device.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying first information associated on a first touch-sensitive display of an electronic device and displaying second information on a second touch-sensitive display of the electronic device;
detecting a first touch on the first touch-sensitive display and detecting a second touch on the second touch-sensitive display;
when the first touch and the second touch are single-gesture associated, performing a function associated with a single gesture;
when the first touch and the second touch are not single-gesture associated, associating the first touch with the first information and the second touch with the second information.

2. The method according to claim 1, wherein first touch attributes and second touch attributes are utilized to identify a corresponding one of a plurality of single gestures.

3. The method according to claim 2, wherein, when a corresponding one of the plurality of single gestures is not identified, the first touch attributes are utilized to identify a first gesture and the second touch attributes are utilized to identify a second gesture.

4. The method according to claim 1, wherein associating the first touch with the first information comprises providing a first input corresponding to a first gesture to a first application.

5. The method according to claim 1, wherein associating the second touch with the second information comprises providing a second input corresponding to a second gesture to a second application.

6. The method according to claim 1, wherein the function is associated with both a first application and a second application.

7. The method according to claim 1, wherein the first touch and the second touch overlap at least partially in time when the first touch and the second touch are single-gesture associated.

8. The method according to claim 1, wherein the first touch and the second touch have endpoints that are near each other in time and space.

9. The method according to claim 1, wherein the function comprises at least one of displaying a keyboard on the first touch-sensitive display and the second touch-sensitive display, displaying a keyboard on one of the first touch-sensitive display and the second touch-sensitive display, and exchanging displayed information such that the first information is displayed on the second touch-sensitive display and the second information is displayed on the first touch-sensitive display.

10. An electronic device comprising:
a first touch-sensitive display;
a second touch-sensitive display;
a processor coupled to the first touch-sensitive display and to the second touch-sensitive display and configured to:
display first information on the first touch-sensitive display of and display second information on the second touch-sensitive display;
detect a first touch on the first touch-sensitive display, detect a second touch on the second touch-sensitive display;
when the first touch and the second touch are single-gesture associated, perform a function associated with a single gesture;
when the first touch and the second touch are not single-gesture associated, associate the first touch with the first information and the second touch with the second information.

11. The electronic device according to claim 10, wherein first touch attributes and second touch attributes are utilized to identify a corresponding one of a plurality of single gestures.

12. The electronic device according to claim 11, wherein when a corresponding one of the plurality of single gestures is not identified, the first touch attributes of the first touch are utilized to identify a first gesture and the second touch attributes are utilized to identify a second gesture.

13. The electronic device according to claim 10, wherein the first touch is associated with the first information by providing a first input corresponding to a first gesture to a first application.

14. The electronic device according to claim 10, wherein the second touch is associated with the second information by providing a second input corresponding to a second gesture to a second application.

15. The electronic device according to claim 10, wherein the first touch and the second touch overlap at least partially in time when the first touch and the second touch are single-gesture associated.
